# EUROPEAN PATENT APPLICATION

(11) **EP 2 400 429 A1**
(43) Date of publication of application: **28.12.2011**
(21) Application number: 11167557.5
(22) Date of filing: 26.05.2011
(51) Int. Cl.: G06F 21/24

(54) **Policy creation using dynamic access controls**

(30) Priority: 23.06.2010 US 821767
(71) Applicant: ITT Manufacturing Enterprises, Inc., Wilmington, Delaware 19801 (US)
(72) Inventor: Dang, Daniel, Jamesville, NY 13078 (US); Nestler, Roger, Clay, NY 13041 (US)
(74) Representative: Dreiss

(57) **Abstract**

A method and system for dynamically managing access to assets such as an electronic document or a hardware component, using policies that comprise one or more dynamic access controls, which are linked to data sources such as databases or web services. The access controls are dynamic because, each time the policy is invoked, the policy and its component access controls must be evaluated with respect to the current information in the linked data sources.

## Description

### STATEMENT REGARDING FEDERALLY-SPONSORED RESEARCH

This invention was made with government support under Contract No. FA8750-08-C-0114 awarded by the U.S. Department of Homeland Security. The government has certain rights in the invention.

### BACKGROUND OF THE INVENTION

In any given enterprise, there are assets that are desired to be secured for a variety of reasons, for example to limit the number and type of employees that can access the assets, or to restrict the usage of the asset. For example, a conventional computer network may provide security for assets such as electronic files by providing access control settings or permissions, whereby the extent and type of users' access to various assets is set forth. For example, in a company, certain users may have read only privileges for a particular electronic document, other users may have read/write privileges, while still other users may have no access privileges at all.

These access control settings may be managed by means of access control policies, and a user wishing to access an asset must conform to the access controls contained in the policy. The use of policies and associated access controls is to a large extent static, that is, the policy is written once and applied when needed. Due to the static nature of predefined access controls and policies, the ability to quickly adapt to change is somewhat hindered.

### SUMMARY OF THE INVENTION

Accordingly, embodiments of the present invention provide systems and methods for creating and modifying policies using dynamic access controls. An embodiment provides methods for dynamically managing access to an asset, comprising receiving a user request to access an asset, in response to receiving the user request, retrieving an access control policy associated with the asset from a storage area, where the access control policy comprises one or more access controls and a logical statement specifying a logical relationship of the one or more access controls to each other, where each access control comprises one or more specified options for an attribute, and is linked to a data source that comprises a value for the attribute, parsing the logical statement, and for each access control in the logical statement, determining whether the access control has a true or false result, evaluating the truth or falsity of the logical statement by processing the true or false results for each access control in the logical statement according to the logical relationship, and determining whether the user is allowed to access the asset, where if the logical statement is true the user is allowed access, and if the logical statement is false the user is denied access. The methods determine whether the access control has a true or false result by connecting to the linked data source, retrieving the value for the attribute from the data source, and comparing the retrieved value to the one or more specified options in the access control, where if the retrieved value matches one or more of the specified options, then the access control result is true, and if the retrieved value does not match one or more of the specified options, then the access control result is false.

Another embodiment provides systems for dynamically managing access to an asset, comprising a client and an access control process. The client is operable by a user to send an access control request requesting access to an asset, receive an access decision, and grant or deny access to the asset based on the received access decision. The access control process is configured to process the access control request by receiving the access control request from the client, in response to the access control request, retrieving an access control policy associated with the asset from a storage area, where the access control policy comprises one or more access controls and a logical statement specifying a logical relationship of the one or more access controls to each other, where each access control comprises one or more specified options for an attribute, and is linked to a data source that comprises a value for the attribute, parsing the logical statement, and for each access control in the logical statement, determine whether the access control has a true or false result, evaluating the truth or falsity of the logical statement by processing the true or false results for each access control in the logical statement according to the logical relationship, creating the access decision, where if the logical statement is true the access decision specifies that the user is granted access, and if the logical statement is false the access decision specifies that the user is denied access, and sending the access decision to the client. The access control process determines whether the access control has a true or false result by connecting to the linked data source, retrieving the value for the attribute from the data source, and comparing the retrieved value to the one or more specified options in the access control, where if the retrieved value matches one or more of the specified options, then the access control result is true, and if the retrieved value does not match one or more of the specified options, then the access control result is false.

The above and still further features and advantages of embodiments of the present invention will become apparent upon consideration of the following detailed description thereof, particularly when taken in conjunction with the accompanying drawings wherein like reference numerals in the various figures are utilized to designate like components.

### BRIEF DESCRIPTION OF THE DRAWINGS

FIG. 1 depicts a block diagram of an exemplary policy creation and modification system of an embodiment of the present invention.

FIG. 2 is a flow chart illustrating the creation or modification of a dynamic access control according to an embodiment of the present invention.

FIG. 3 is a screen shot illustrating a dynamic access control creation wizard according to an embodiment of the present invention.

FIG. 4 is a flow chart illustrating the creation or modification of a dynamic policy comprising a dynamic access control according to an embodiment of the present invention.

FIG. 5 is a screen shot illustrating a dynamic policy creation wizard according to an embodiment of the present invention.

FIG. 6 is a flow chart illustrating the verification of a dynamic access control according to an embodiment of the present invention.

### DETAILED DESCRIPTION OF THE PREFERRED EMBODIMENTS

The present invention is directed to methods and systems for dynamically managing access controls and policies for an asset such as an electronic document, a hardware component, or the like. The policies comprise one or more dynamic access controls, which are linked to data sources such as databases, web services, and the like. The access controls are dynamic because, each time the policy is invoked, the policy and its component access controls must be evaluated with respect to the current information in the data source(s). Accordingly, unlike traditional static access control lists, the dynamic access controls are able to dynamically and automatically adapt in near real-time to changes when a particular event or outside stimulus occurs, thus ensuring that the access controls are always up-to-date with current needs without the need to change the access controls or policies themselves. Further, the methods and systems enable central control at a high level of the granular decisions made by multiple access controls that are being used to protect assets throughout an enterprise.

Because the access controls are based on the value of data attributes in the data sources, the access controls are not static rules that grant access based on who a user is, but instead are dynamic rules that grant access based on the validation of information about the user. For example, a policy may comprise a dynamic access control that limits file access to employees with secret or higher security clearance, which is linked to an employee database containing security clearance status. When an employee receives a promotion in security clearance, for example from confidential to top secret, or receives a demotion in security clearance, for example from secret to confidential, then the dynamic access control automatically obtains this information from the employee database and the policy is updated to permit or deny file access to that employee as is appropriate. Thus, the access control policies are always up-to-date and automatically adapt to changes in access control data.

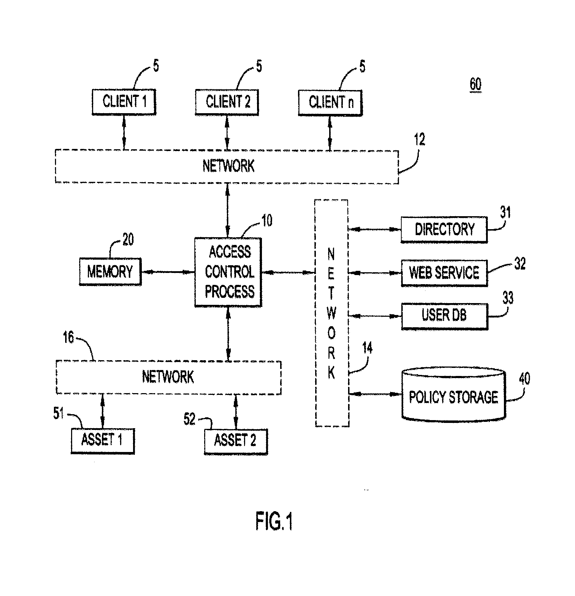

Referring now to the Figures, an exemplary system employing dynamic management of access controls according to an embodiment of the present invention is illustrated in FIG. 1. The system shown in FIG. 1 is particularly suited to the dynamic management of access control policies over a network or the Internet, however it should be understood that the systems of the present embodiments are not so limited, and could be used in a non-networked or self-contained system.

The depicted system 60 includes an access control process 10, associated shared or working memory 20, data sources including a directory 31, a web service 32, and a user database 33, a data storage area 40 for storing policies and access control information, and one or more assets 51, 52, which are connected over optional networks 12, 14, 16 to each other and to clients 5. The system 60 may include additional servers, clients, and other devices not shown, and individual components of the system may occur either singly or in multiples, for example, there may be more than one data storage area.

Generally, clients 5 provide an interface to the functions provided by the policy management system 60, for example, mechanisms for creating, viewing, applying and exporting policies from the system, etc. The clients 5 can be configured to provide "visible" or "invisible" interfaces to the system. For example, in a first embodiment, a client 5 provides end-users with an invisible interface to the policy management system, in that the end-users are able to access and manipulate assets to which access is controlled by policies being managed by the system, without the end-users even being aware of the system. In such an embodiment, the clients 5 would also provide a system administrator with a visible interface to the system, so that a system administrator is able to, e.g., create, view, apply and export policies from the system. For example, an end-user may use a client device such as an electronic access panel (e.g., for swiping access cards or allowing keypad entry) to access a laboratory facility, without being aware of the policy management system, whereas a system administrator may use a client device such as a computer terminal to access the system itself. In a second embodiment, the clients 5 provide end-users and administrators with a visible interface to the system, although administrators may be provided with additional options (e.g., deleting or exporting policies) that are not available to end-users.

The access control process 10 may provide an application program configured for creating, modifying, archiving, deleting or removing policies managed by the system 60, and may contain tools used for policy management, access control, and facilities for performing searches and other operations related to the policies managed by the system 60. When a user accesses a particular access control policy, it is loaded from data storage area 40 into memory 20, so that the policy may be updated as needed by access control process 10. Memory 20 may be implemented by any conventional or other memory or storage device, may be volatile (e.g., RAM, cache, flash, etc.), or non-volatile (e.g., ROM, hard-disk, optical storage, etc.), and may comprise any suitable storage capacity.

Networks 12, 14, 16 may be implemented by any quantity of any suitable communications media (e.g., WAN, LAN, Internet, Intranet, wired, wireless, etc.). The computer systems of the present embodiments may include any conventional or other communications devices to communicate over the networks via any conventional or other protocols, and may utilize any type of connection (e.g., wired, wireless, etc.) for access to the network. It is understood that any of the client 5, access control process 10, memory 20, data sources 31, 32, 33, data storage system 40 and assets 51, 52 may be local to one or more components of system 60, or may be remote from and in communication with one or more other components of system 60 via one or more networks 12, 14, 16.

Data sources 31, 32, 33 may be any suitable number and type of data source as is needed to operate the system in the desired fashion. Data sources may comprise enterprise data sources (e.g., DB2, Oracle, IBM Enterprise Content Management (ECM) systems, ERP systems, etc.), personal and intra-organization data sources (e.g., spreadsheets (e.g., Microsoft Excel) or databases (e.g., Microsoft Access, MySQL, Sharepoint, Quickr, XML, etc.)), web-based data sources such as public databases (e.g., tax records, real estate records, court documents, etc.), web services, etc. Data storage system 40 may be implemented by any quantity of any type of conventional or other databases (e.g., network, hierarchical, relational, object, etc.) or storage structures (e.g., files, data structures, web-based storage, disk or other storage, etc.).

Assets 51, 52 may be any type of asset for which security is desired, and may be physical, electronic, or in any other suitable form. Exemplary physical assets may include facilities such as buildings, workspaces such as laboratories or file rooms, vehicles such as automobiles or motorcycles, office equipment such as computers, modems or copiers, areas or structures such as rooms, cabinets or garages, individual hardware components inside a device, etc. For example, the systems and methods may be used to control use and access to hardware items, for example a user's ability to access a computer's network card could be controlled by a dynamic policy, and may also be used to control access to a facility or areas within the facility, for example in a chemical research environment, it may be desirable to limit access to storage areas containing dangerous chemicals to authorized personnel.

Exemplary electronic assets may include databases, electronic documents, server access, software applications, user profiles, etc. Electronic documents can be any type of electronic file or data now known or later developed, such as, but not limited to HTML and XML Web content, document images, electronic records, database records, word processing documents, presentation slides, office documents, e-mail messages or archives, games, textual data, electronic books, graphics, audio, video, SMS or MMS messages, other digital representations of information, and/or combinations thereof. For example, the systems and methods may be used to provide digital rights control to files, for example in a system where only certain users have the rights to access video or audio files, and only after they have satisfied specified criteria.

Access to a computer system or network may also be an asset controlled by these embodiments. For example, a policy can be defined with access controls that define the proper use and/or misuse of a computer system or network, and may be set up to grant or deny access in real-time as users interact within a system or between systems. The systems and methods may also be used for identification checks, for example by having a passport database, denied parties list, or criminal records database as a data source.

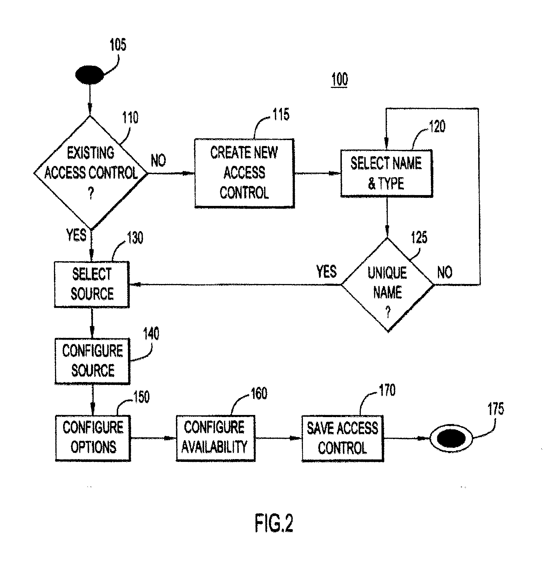

Referring now to FIG. 2, an administrator may use the system that has been previously described, and particularly the access control process 10 to perform the steps of FIG. 2, in which reference numeral 100 generally designates a flow chart depicting a process for creating or modifying a dynamic access control. The process begins at 105, and in step 110 determines whether the access control already exists, and if yes, loads the access control into memory and proceeds to step 130. If not, a new access control is created in step 115, and its name and type are selected in step 120. The name may be any suitable name, for example an access control based on the type of employee may be called "Employee Type", and an access control based on the time and date may be called "Access Time", etc. The type of access control refers to how the access control may be used in an access policy, for example there may be options indicating that a single option may be selected, multiple options may be selected, or a logical statement may be applied to the access control. In step 125, the name is checked to ensure it is unique in the system, and if not, the process cycles back to step 120 to select a new name. Once a unique name has been determined, the access control is loaded into memory and the process proceeds to step 130.

In step 130, the administrator selects a data source. The data source may be any source that contains or obtains information used by the access controls, for example information about employees, information about conditions under which access may be granted and/or denied, etc. The data source includes at least one attribute that has a value, for example, an employee database may comprise an employee status attribute with possible values of full time, part time, contractor or intern, and a work location attribute with possible values of New York Office, California Office, etc. Depending on the type of access control desired, different sources may be used. In step 140, the administrator configures the connection to the data source, for example with a location, credentials, and attribute names. For example, if the data source is a web service, configuring the connection may involve entering an IP address or other location where to access the service, a port, credentials such as a user name and password, an attribute name to be applied (e.g., time, temperature, employee type, security clearance level, department, work location, etc.).

In step 150, the administrator configures the options for the access control. The options depend on the access control type, the data source that is selected, and the attributes of the data source. For example, if the access control is based on employee information and the selected data source is an active directory of employee information comprising a security clearance attribute, the possible values for the attribute include, e.g., none, FOUO, confidential, secret, top secret, etc. The available options may directly match a possible value, e.g., secret clearance, or may match with multiple values, e.g., secret or higher clearance, which matches with secret, top secret, and higher level clearances. The options may also be user-defined. For example, if the access control is date and time based, and the selected data source is a web service providing date and time attributes, the administrator may configure options for the date attribute such as the day of the week (e.g., business days only, every day, every other day, weekends only, etc.), and may configure options for the time attribute such as morning, afternoon, evening, business hours, etc.

In step 160, the administrator configures the availability of the access control, e.g., a list of users who may select this access control for use in an access policy, or a list of locations where this access control will appear, etc. In step 170, the access control is saved, and at step 175 this process ends.

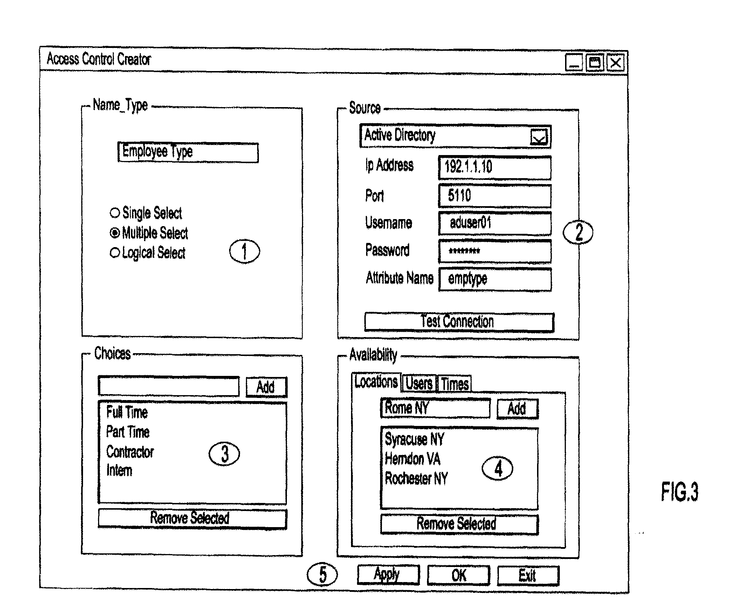

An exemplary Graphic User Interface (GUI) illustrating an embodiment of process 100 for creating an access control is shown in FIG. 3 with respect to an exemplary "Employee Type" access control. At reference point 1, the administrator has entered in the access control name, and has indicated that this access control has a "Multiple Select" type, meaning that multiple options may be selected for this access control. At reference point 2, the administrator configures the data source for this access control, in this case by selecting an active directory as the data source and entering in an IP address, port, user name, password, and an attribute name indicating where the desired information may be found in the data source. The administrator may also test the connection at this time to determine if the information entered is valid.

At reference point 3, the administrator configures the options for the access control, in this case by adding various choices that may be selected, for example "Full Time", "Part Time", or "Contractor." At reference point 4, the administrator configures the availability of the access control, for example, by specifying a list of users who may select this access control for use in an access policy, or a list of locations where this access control will appear, etc. At reference point 5, the administrator may save or apply this access control.

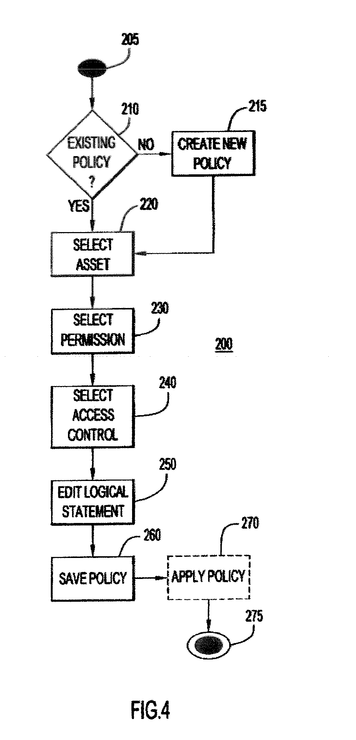

Referring now to FIG. 4, an administrator may use the system that has been previously described, and particularly the access control process 10 to perform the steps of FIG. 4, in which reference numeral 200 generally designates a flow chart depicting a process for creating or modifying a dynamic access policy. The process begins at 205, and in step 210 determines whether the policy already exists, and if yes, loads the policy into memory and proceeds to step 220. If no, the process creates a new policy in step 215. In step 220, the administrator selects one or more assets to which the policy will be applied.

In step 230, the administrator selects a permission or permissions to which the policy will be applied. These permissions may vary depending on the nature of the asset being protected by the policy, for example for an electronic document, the permissions may be standard file permissions such as "Open" or "Read", "Write", "Execute", "Print" and the like. For a different type of asset, for example if the asset being protected is admission to a laboratory, the permissions might be "Self Admit", "Admit with Guest", "Grant Admission to Others" or the like.

In step 240, the administrator selects one or more access controls that are available to added to the policy, and may select from the available options for each access control. For example, for the exemplary "Employee Type" access control depicted in FIG. 3, the available options include "Full Time", "Part Time", "Contractor" and "Intern." For an exemplary "Security Clearance" access control, the available options may include "none", "FOUO", "confidential", "secret", and "top secret." As an example, if the desired policy is to permit certain types of employees who have a security clearance of FOUO or higher to access certain documents, the administrator may select the "Full Time", "Part Time" and "Contractor" options for the "Employee Type" access control, and may select "FOUO" (For Official Use Only) for the "Security Clearance" access control.

In step 250, the administrator can create or edit a logical statement that specifies one or more access controls and the relationship between them, using logical expressions such as AND, OR and NOT. For example, for the exemplary policy permitting certain types of employees who have a security clearance of FOUO or higher to access certain documents, the administrator might enter the following logical statement: Employee Type AND Security Clearance.

In step 260, the administrator can save the policy, and optionally in step 270, the administrator can apply the policy to an asset to initiate access control. The process ends at 275. When the policy is applied to an asset, any individual attempting to access the asset must satisfy all of the access controls in the policy for the desired permission before they will be allowed to access the asset.

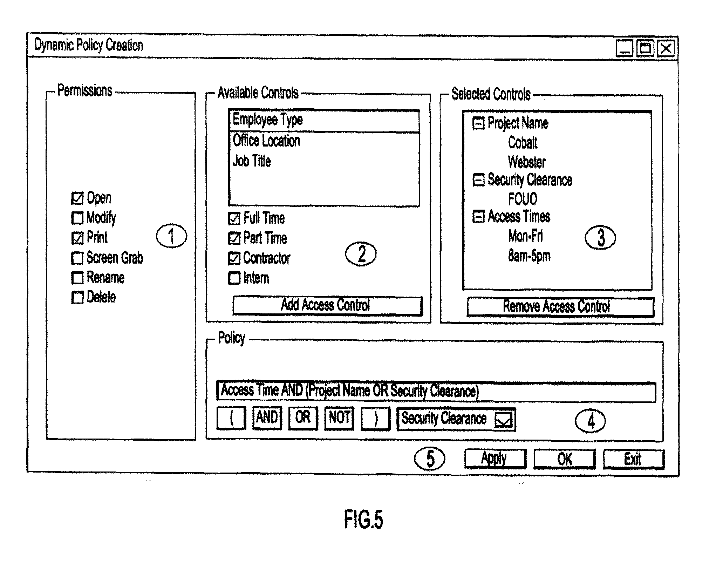

An exemplary Graphic User Interface (GUI) illustrating an embodiment of process 200 for creating a policy is shown in FIG. 5 with respect to an exemplary policy. At reference point 1, the administrator selects the permissions to which this policy will apply, in this example "Open" and "Print." At reference point 2, the administrator selects one or more access controls that are available to added to the policy, for example the "Employee Type" access control, and has selected from the available options for that access control, for example "Full Time", "Part Time", and "Contractor". As shown at reference point 3, the GUI may comprise a panel displaying the selected access controls that have been added. In this case, the "Project Name", "Security Clearance" and "Access Time" access controls have already been selected. At reference point 4, the GUI allows the administrator to create a logical statement. At reference point 5, the administrator may save the policy, apply the policy, or exit the GUI.

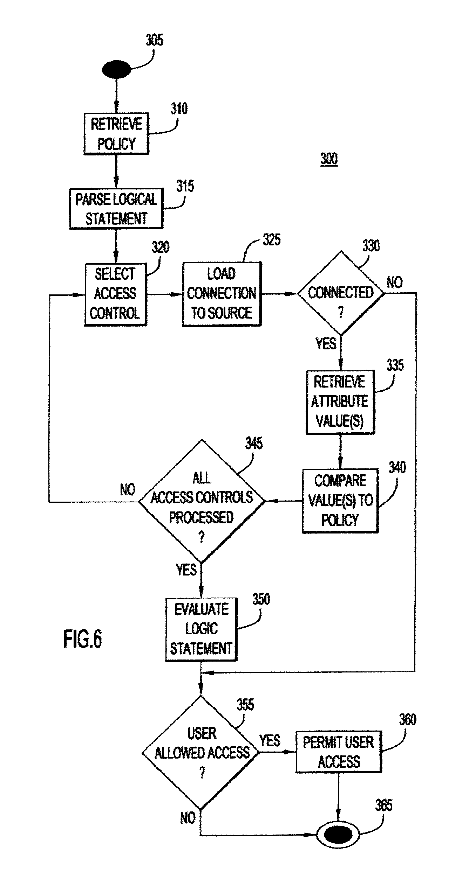

Referring now to FIG. 6, the reference numeral 300 generally designates a flow chart depicting a process for verifying a dynamic access control policy, which may be performed by the system that has been previously described, and particularly the access control process 10. The process begins at 305, and may be triggered by a user request to access an asset or exercise a particular permission on an asset. In step 310 the process retrieves a policy that applies to the asset, and in step 315 parses the logical statement and loads each of the access controls found in the statement.

Each access control is then individually processed, using steps 320 through 345. At step 320, an access control is selected, and at step 325 the connection to the data source for that access control is loaded. At step 330 the process determines if a connection was established, and if yes, proceeds to step 335. If not, the process proceeds to step 355. At step 335, the system retrieves the configured attribute value(s) associated with the requesting user from the data source, and in step 340 compares the retrieved value(s) to the options specified by the policy. For example, for an "Employee Type" access control, the retrieved value may be "Full Time", which agrees with the specified options in the policy. At step 345 the system determines if there are any other access controls to process, and if yes, returns to step 320. If not, the system proceeds to step 350.

In step 350, the system evaluates the logic statement to determine whether the final result is true or false, based on whether each of the associated access controls have a true or false value. In step 355 determines whether the user is allowed access, e.g., the logic statement is evaluated to determine if the overall value is true and the user may be granted access, or false in which case the user is denied access. If true, the user is allowed access in step 360, and the process terminates in step 365. If false, the user is denied access and the process terminates in step 365.

Although the depicted examples describe and illustrate two separate processes for creating or modifying a dynamic access control and for creating or modifying an access control policy, these processes may be combined into a single process, or split into two or more processes in any suitable manner. The software and/or algorithms described above and illustrated in the flow charts may be modified in any manner that accomplishes the functions described herein. In addition, the functions in the flow charts or description may be performed in any order that accomplishes a desired operation.

The embodiments of the present invention can take the form of an entirely hardware embodiment, an entirely software embodiment or an embodiment containing both hardware and software elements. In a preferred embodiment, the invention is implemented in software, which includes but is not limited to firmware, resident software, microcode, etc. The software may be available on a recordable medium (e.g., magnetic, optical, floppy, DVD, CD, etc.) or in the form of a carrier wave or signal for downloading from a source via a communication medium (e.g., network, LAN, WAN, Intranet, Internet, etc.). The software may be part of an operating system or a specific application, component, program, module, object, or sequence of instructions.

It is to be understood that the software may be implemented in any desired computer language and could be developed by one of ordinary skill in the computer arts based on the functional descriptions contained in the specification and flow charts illustrated in the drawings. By way of example only, the software may be implemented in the C#, C++, Python, Java, XML or PHP programming languages, and data storage may be implemented in MySQL, Oracle, SQL Server, IBM DB2, Informix or a flat database, etc. Further, any references herein to software performing various functions generally refer to computer systems or processors performing those functions under software control.

The computer systems may alternatively be implemented by any type of hardware and/or other processing circuitry. The various functions of the computer systems may be distributed in any manner among any quantity of software modules or units, processing or computer systems, objects, data structures and/or circuitry, where the computer or processing systems may be disposed locally or remotely to each other and communicate via any suitable communications medium (e.g., LAN, WAN, Intranet, Internet, hardwire, modem connection, wireless, etc.).

Furthermore, the present embodiments can take the form of a computer program product accessible from a computer-usable or computer-readable medium providing program code for use by or in connection with a computer or any instruction execution system. For the purposes of this description, a computer-usable or computer readable medium can be any apparatus that can contain, store, communicate, propagate, or transport the program for use by or in connection with the instruction execution system, apparatus, or device. The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk--read only memory (CD-ROM), compact disk--read/write (CD-R/W) and DVD. In a preferred embodiment, the computer-usable or computer-readable medium is a tangible medium.

A processing system suitable for storing and/or executing program code may be implemented by any conventional or other computer or processing systems preferably equipped with a display or monitor, a base (e.g., including the processor, memories and/or internal or external communications devices (e.g., modem, network cards, etc.) and optional input devices (e.g., a keyboard, mouse or other input device)). The system can include at least one processor coupled directly or indirectly to memory elements through a system bus. Memory may be implemented by any conventional or other memory or storage device (e.g., RAM, cache, flash, etc.), and may include any suitable storage capacity. The memory elements can include local memory employed during actual execution of the program code, bulk storage, and cache memories which provide temporary storage of at least some program code in order to reduce the number of times code must be retrieved from bulk storage during execution. Input/output or I/O devices (including but not limited to keyboards, displays, pointing devices, etc.) can be coupled to the system either directly or through intervening I/O controllers. Network adapters may also be coupled to the system to enable the processing system to become coupled to other processing systems or remote printers or storage devices through intervening private or public networks. Modems, cable modem and Ethernet cards are just a few of the currently available types of network adapters.

End-user systems may be implemented by any quantity of conventional or other computer systems or devices (e.g., computer terminals, personal computers (e.g., IBM-compatible, Apple MacIntosh, tablet, laptop, etc.), etc.), cellular telephones, personal data assistants (e.g., Palm Pre, Droid, iPhone, etc.), etc., and may include any commercially available operating system (e.g., AIX, Android, Linux, OSX, Sun Solaris, Unix, Windows, etc.) and any commercially available or custom software (e.g., browser software, communications software, word processing software, etc.). These systems may include displays and input devices (e.g., keyboard, mouse, voice recognition, etc.) to enter and/or view information. The end-user systems may be local to the process and data storage areas, or remote from and in communication with the server and data storage areas via a network.

Networks may be implemented by any quantity of any suitable communications media (e.g., WAN, LAN, Internet, Intranet, wired, wireless, etc.). The computer systems may include any conventional or other communications devices to communicate over the networks via any conventional or other protocols, and may utilize any type of connection (e.g., wired, wireless, etc.) for access to the network.

The foregoing disclosure of the preferred embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

## Claims

1. A method for dynamically managing access to an asset, in particular an electronic document, comprising:
receiving a user request to access an asset;
in response to receiving the user request, retrieving an access control policy associated with the asset from a storage area, wherein the access control policy comprises one or
more access controls and a logical statement specifying a logical relationship of the one or more access controls to each other, wherein each access control comprises one or more specified options for an attribute, and is linked to a data source that comprises a value for the attribute;
parsing the logical statement, and for each access control in the logical statement,
determining whether the access control has a true or false result by:
connecting to the linked data source;
retrieving the value for the attribute from the data source; and
comparing the retrieved value to the one or more specified options in the access control, wherein if the retrieved value matches one or more of the specified options, then the access control result is true, and if the retrieved value does not match one or more of the specified options, then the access control result is false;
evaluating the truth or falsity of the logical statement by processing the true or false results for each access control in the logical statement according to the logical relationship; and
determining whether the user is allowed to access the asset, wherein if the logical statement is true the user is allowed access, and if the logical statement is false the user is denied access.

2. The method of claim 1, wherein the user request to access the asset comprises a request to exercise one or more permissions on the asset, wherein each permission specifies an action that may be performed on or with the asset.

3. The method of claim 1 or 2, further comprising:
wherein, if for any access control, a connection to the linked data source cannot be made, setting the true or false result for that access control to false.

4. The method of one of the preceding claims, further comprising:
receiving a request to create or modify the access control policy;
in response to receiving the request, creating the access control policy if it does not yet exist, or retrieving the access control policy from the storage area if it already exists;
selecting one or more assets to which access is to be controlled by the access control policy;
selecting one or more access controls to include in the access control policy;
editing the logical statement that specifies the logical relationship of the one or more access controls; and
saving the access control policy comprising the selected access controls and the edited logical statement in the storage area.

5. The method of one of the preceding claims, wherein the one or more assets are associated with one or more permissions and each permission specifies an action that may be performed on or with one of the assets, and further comprising:
selecting one or more of the permissions associated with the asset for inclusion in the access control policy, wherein a user request to exercise a selected permission on the asset will trigger the retrieval of the access control policy.

6. The method of one of the preceding claims, further comprising:
receiving a request to create or modify one of the one or more access controls;
in response to receiving the request, creating the access control if it does not yet exist, or retrieving the access control from the storage area if it already exists;
selecting one or more data sources to be linked to the access control, wherein each data source comprises a value for each of one or more attributes, and each attribute of each data source may be different than each attribute of the same or another data source;
for each data source, selecting an attribute from the one or more attributes to include in the access control, and specifying in the access control one or more options for the selected attribute; and
saving the access control in the storage area;
and in particular further comprising for each data source, configuring a connection between the data source and its linked access control by entering location information for the data source in the linked access control.

7. The method of one of the preceding claims, wherein the data source is a web service or a database, and at least one attribute of the data source is a table.

8. A system for dynamically managing access to an asset, in particular a hardware component of the system or an electronic document, comprising:
a client operable by a user to:
- send an access control request requesting access to an asset;
- receive an access decision; and
- grant or deny access to the asset based on the received access decision; and an access control processor configured with logic to process the access control request by:
- receiving the access control request from the client;
- in response to the access control request, retrieving an access control policy associated with the asset from a storage area, wherein the access control policy comprises one or more access controls and a logical statement specifying a logical relationship of the one or more access controls to each other, wherein each access control comprises one or more specified options for an attribute, and is linked to a data source that comprises a value for the attribute;
- parsing the logical statement, and for each access control in the logical statement, determine whether the access control has a true or false result by:
- connecting to the linked data source;
- retrieving the value for the attribute from the data source; and
- comparing the retrieved value to the one or more specified options in the access control, wherein if the retrieved value matches one or more of the specified options, then the access control result is true, and if the retrieved value does not match one or more of the specified options, then the access control result is false;
- evaluating the truth or falsity of the logical statement by processing the true or false results for each access control in the logical statement according to the logical relationship;
- creating the access decision, wherein if the logical statement is true the access decision specifies that the user is granted access, and if the logical statement is false the access decision specifies that the user is denied access; and
- sending the access decision to the client.

9. The system of claim 8, wherein the system is a computer program product stored on a tangible storage medium.

10. The system of claim 8 or 9, wherein the access control process is implemented by a processor configured with logic to process the access control request.

11. The system of one of claims 8 to 10, wherein the user request to access the asset comprises a request to exercise one or more permissions on the asset, wherein each permission specifies an action that may be performed on or with the asset.

12. The system of one of claims 8 to 11, further comprising:
an administrative client operable by a user to:
- send a request to create or modify the access control policy to the access control process;
- receive a set of policy options from the access control process;
- select one or more policy options from the received set of policy options;
- edit the logical statement; and
- send the selected policy options and the logical statement to the access control process;
wherein the access control process is further configured to create or modify the access control policy by:
- receiving the request to create or modify the access control policy from the client;
- in response to receiving the request, creating the access control policy if it does not yet exist, or retrieving the access control policy from the storage area if it already exists;
- sending a set of policy options to the client, wherein the policy options comprise an asset list of one or more assets to which access can be controlled by the access control policy and an access control list of one or more access controls that can be included in the access control policy;
- receiving the selected policy options and the edited logical statement from the client, wherein the selected policy options include one or more selected assets from the list of one or more assets, and one or more selected access controls from the access control list; and
- saving the access control policy comprising the received policy options and the edited logical statement in the storage area.

13. The system of one of claims 8 to 12, further comprising:
an administrative client operable by a user to:
- send a request to create or modify one of the access controls to the access control process;
- receive a set of control options from the access control process;
- select one or more control options from the received set of control options; and
- send the selected control options to the access control process;
wherein the access control process is further configured to create or modify the access control by:
- receiving the request to create or modify the access control from the client;
- in response to receiving the request, creating the access control if it does not yet exist, or retrieving the access control from the storage area if it already exists;
- sending a set of control options to the client, wherein the control options comprise a source list of data sources that can be linked to the access control, wherein each data source comprises a value for each of one or more attributes, and each attribute of each data source may be different than each attribute of the same or another data source;
- receiving the selected control options from the client, wherein the selected control options include one or more selected data sources from the source list, and, for each selected data source one or more selected attributes from that data source and one or more options for each selected attribute; and
- saving the access control comprising the received control options in the storage area.

14. The system of one of claims 8 to 13, wherein the data source is a database or a web service or a table.
